# EUROPEAN PATENT APPLICATION

(11) **EP 1 834 749 A1**
(43) Date of publication of application: **19.09.2007**
(21) Application number: 06450152.1
(22) Date of filing: 24.10.2006
(51) Int. Cl.: B29C 33/38, B29C 33/40, B29K 61/04

(54) **Mould and method of producing a mould**

(30) Priority: 14.03.2006 EP 06450036
(71) Applicant: Electrovac AG, 3400 Klosterneuburg (AT)
(72) Inventor: Shepheard, Paul, March PE15 8NH (GB)
(74) Representative: Gibler, Ferdinand

(57) **Abstract**

A mould for producing an article to be formed therein is provided wherein the mould matrix material contains at least one type of carbon fibres. The mould matrix material comprises a phenolic resin. Thereby, a high operating temperature of the mould matrix material and a wear resistant mould can be achieved. Hence, use of the mould in a series production becomes possible. Preferably, the mould matrix material comprises carbon nano fibres.

## Description

The present invention relates to a mould for producing an article to be formed therein, the mould matrix material containing at least one type of carbon fibres.

In the prior art usually steel moulds are used for the manufacture of products in a series production. Due to minimal wear steel moulds allow a high number of products to be moulded within the same mould. However, steel moulds cannot easily be changed in their design which make them unfavourable during prototyping or the pre-production phase. Therefore, until recently prototypes have been formed by casting in sand. These casts do, however, not allow high pressure moulding. This results in prototypes that do not have the exact properties of the later product which will then be casted in a steel mould.

Therefore, moulds made from epoxy resin were developed, that can be produced cheaply. While these moulds make quick changes in the design of the prototype possible, they are subject to quite severe pressure limitations. If casting is performed at high pressure these moulds tend to wear and break and are therefore not capable of being used several times.

In order to build prototypes having already the exact properties of the later product in a series production attempts have been made to find alternatives to the expensive steel moulds but still allowing pressure casting. Amongst these British Patent Application GB 2 360 244 A describes a mould made from an elastomer such as polyurethane. While these moulds have led to progress in the field of rapid prototyping their use is still limited to the prototyping phase. One reason for this is that they still tend to wear so that only a small number of products may be produced with one mould. Another reason is their drawback that products made within these moulds cannot fulfil the requirements of surface properties expected from customers. Due to their surface roughness labour-intensive surface finishing would have to be made if these products should be sold in a large scale.

Hence, there is still need for a mould that can be produced cheaply, changed in design quickly and that can also be used for high pressure moulding in a series production.

It is therefore an object of the present invention to provide a mould having a hard surface, a high melting point and being resistant to wear. It is a further object of the invention to provide a mould that can be used in a series production while being easy and cheap to manufacture.

These and other objects are achieved by a mould of the kind outlined above made from a matrix material comprising a cured phenolic resin.

By using a mould matrix material made from phenolic resin and at least one type of carbon fibres a mould can be made that has a hard surface and is resistant to wear. It can be used with high pressure moulding techniques and is therefore capable of replacing expensive steel moulds. Due to the possibility of high pressure moulding exceptionally shiny surfaces of the product can be achieved. The carbon fibres can be of any kind including refractory fibres, fibrils, short fibres, nano fibres, etc. The fibres can be arranged in mats, they can be distributed randomly or be arranged in layers or even changing their concentration gradually. The resin may be selected from any type of phenolic resins and may even be a mixture of different types of phenolic resins. Preferably, a water based liquid phenolic resin is used and mixed with a catalyst to cure the resin and form a rigid mould.

In an advantageous embodiment of the invention the mould matrix material will have a flexural strength in the range of 250 to 500 Mpa and a flexural modulus in the range of 10 to 30 Gpa. The outstanding flexural properties respectively the high rigidity are allowing high pressure moulding at high precision and low tolerances of the product.

In an advantageous embodiment of the invention the mould matrix material will have a compressive strength in the range of 200 to 300 Mpa and a compressive modulus in the range of 5 to 15 GPa. This allowing high pressure moulding at similar moulding conditions as used in serial production. Also the use of this mould is not limited to pre-production materials. Therefore prototypes comprising the same material and/or showing the same properties, particularly mechanical properties, like the material chosen for serial production can be used. Testing of these prototypes can deliver more reliable testing results and the testing phase can be shorter and cheaper.

In an advantageous embodiment of the invention the mould matrix material will have a hardness in the range of 50 to 125 Vickers, whereby the mould matrix has a hard surface allowing minimal wear and/or a high number of pieces produced during the lifetime of the mould. The mould can be used also for moulding reinforced materials like glass fibre reinforced thermoplastics.

In an advantageous embodiment of the invention the mould matrix material will have a tensile modulus in the range of 15 to 40 GPa. The high rigidity of the mould is allowing high pressure moulding at high precision and low tolerances of the product. high precision prototypes can be produced. This allowing more reliable measurements and testing on the prototypes.

In an advantageous embodiment of the invention the mould matrix material will have a tensile strength in the range of 150 to 350 Mpa. The high tensile strength of the mould is allowing high pressure moulding. The use of a mould with such properties is not limited to prototyping but can also be used for serial production. Also a high dwell pressure can be applied allowing the production of parts with low shrinkage and a high precision and low tolerances in dimensions.

In particular, a mould matrix material can be made that has a continuous operating temperature above 350°C and a transient operating temperature of up to 600°C. This allows moulding with materials having a higher melting point than those used in the prior art.

The mould matrix material obtained can have a thermal conductivity in the range of 10 to 100 W/mK, preferably between 25 and 50 W/mK. This improved thermal conductivity allows replacing steel moulds.

The mould made from the the mould matrix material according to the present invention can have an electric conductivity in the range of 10⁻⁴ Ωm to 10⁻² Ωm. Applying this electric conductivity to the mould matrix material makes it possible to heat the mould by resistive heating.

In a further aspect of the present invention the mould matrix material may further comprise at least one type of a filler material. By choosing proper filler materials it is possible to adjust or enhance the properties of the mould matrix material. These properties include hardness, rigidity, electrical and thermal conductivity, heat capacity, etc.

In this context the filler material may increase the electrical conductivity of the mould matrix material. Therefore, the filler material may preferably comprise a metal, a precious metal and/or pieces thereof, e.g. aluminium, copper, titanium and/or steel fibres.

The filler material may alternatively or additionally increase the thermal conductivity of the mould matrix material. Therefore, the filler material may preferably comprise a metal, a ceramic, other materials and/or pieces thereof, e.g. aluminium nitride, boron nitride, silicon nitride, steel fibres and/or graphite flakes.

Another advantageous improvement may be that the mould comprises means for cooling the mould, e.g. channels for a cooling liquid such as water or oil. It becomes therefore feasible to cool the mould and hence the product being formed therein. This allows shorter solidifying times of the product which results in a higher number of products being made in the same time. Hence, efficiency is improved and profit can be raised.

Preferably, the carbon fibres in the mould matrix material of the mould according to the present invention may include carbon nano fibres. It has been found out that the presence of carbon nano fibres in the mould matrix material dramatically improves the mechanical properties of the material. A mould matrix material made from phenolic resin comprising carbon nano fibres is significantly less prone to break or tear. However, it still retains its hard surface and high rigidity.

In a further advantageous embodiment of the invention the mould matrix material may contain at least two types of carbon fibres, one type of which including carbon nano fibres. Using both carbon fibres and carbon nano fibres results in less cost but still in a mould having the outstanding properties resulting from the carbon nano fibres.

According to an aspect of the present invention said at least two types of carbon fibres may be mixed homogeneously within the mould matrix material. This allows production of the mould in a single step and results in material properties that are uniform over the whole matrix material.

According to another aspect of the present invention said at least two types of carbon fibres may be arranged in layers within the mould matrix material. It is therefore possible to build up a cheap support part made from phenolic resin and usual carbon fibres.

In this context the carbon nano fibres may be arranged in a surface layer which is adapted to come - in use - into contact with the article to be formed within the mould. In this surface layer carbon nano fibres can be used to achieve the superior properties. Hence, overall cost of the mould is reduced while high surface quality of the product and high resistance against breaking or tearing of the mould are still attained.

In a specific embodiment the content of carbon nano fibres in the respective layer may be in a range between 10 to 70 wt% of the whole mould matrix material in the respective layer, preferably between 30 and 60 wt%, in particular 50 wt%.

The invention further relates to a method of producing a mould comprising the steps of:
mixing a liquid phenolic resin with at least one type of carbon fibres and a catalyst enabling the mixture to cure;
applying said mould matrix material around a pattern;
applying a temperature and a pressure to the matrix material for a predetermined time causing it to harden;
removing the pattern from the mould.

With this method a mould can be made having the superior qualities as outlined above can be made.

The method may preferably applied such that the temperature to harden the mould matrix material is less than 100°C, preferably in a range between 70° to 80° C. Therefore, a more accurate mould can be produced. It features a lower shrinkage due to the rather low curing temperature.

Preferably, the pressure to harden the mould matrix material can be less than 1000 psi, preferably in a range between 500 to 800 psi. This also results in a very accurate and precise mould.

According to a further aspect of the invention the method may further comprise the step of mixing a filler material to the liquid phenolic resin, preferably a metal, a precious metal, a ceramic, other materials and/or pieces thereof, e.g. aluminium, copper, titanium, aluminium nitride, boron nitride, silicon nitride, steel fibres and/or graphite flakes. By choosing proper filler materials it is possible to adjust or enhance the properties of the mould matrix material. These properties include hardness, rigidity, electrical and thermal conductivity, heat capacity, etc.

In another preferred embodiment of the present invention the content of catalyst may be less than 5wt% of the total weight of phenolic resin and catalyst. This rather small amount of catalyst will result in an even more accurate and precise mould with exact proportions.

Preferably, the method can be performed with the carbon fibres including carbon nano fibres. As already stated above, it has been found out that the presence of carbon nano fibres in the mould matrix material dramatically improves the mechanical properties of the material. A mould matrix material made according to the inventive method from phenolic resin comprising carbon nano fibres is significantly less prone to break or tear. However, it still retains its hard surface and high rigidity.

Advantageously, the mould matrix material can include at least two types of carbon fibres, one type of which including carbon nano fibres. Using both carbon fibres and carbon nano fibres results in less cost but still in a mould having the outstanding properties resulting from the carbon nano fibres.

According to one aspect of the present invention the step of mixing can be performed to obtain a homogenous mixture of the at least two types of carbon fibres. This allows production of the mould in a single step and results in material properties that are uniform over the whole matrix material.

According to another aspect of the present invention the step of mixing can be performed separately for the at least two types of carbon fibres, thereby obtaining at least two mixtures of mould matrix material. The method step of applying said mould matrix material around a pattern may then comprise the sub-steps of:
applying a first mixture of mould matrix material, preferably the one containing said carbon nano fibres, around the pattern, thereby forming a first layer of mould matrix material; and
applying a second mixture of mould matrix material around the obtained first layer enclosing the pattern, thereby forming a second layer of mould matrix material.

It is therefore possible to build up a cheap support part made from phenolic resin and usual carbon fibres. In the surface layer, i.e. the first layer around the pattern, carbon nano fibres can be used to achieve the superior properties. Hence, overall cost of the mould is reduced while high surface quality of the product and high resistance against breaking or tearing of the mould are still attained.

In this context the content of carbon nano fibres in the respective layer may advantageously be in a range between 10 to 70 wt% of the whole mould matrix material of the respective layer, preferably between 30 and 60 wt%, in particular 50 wt%.

The invention will now be described by way of example only with reference to the accompanied drawings, in which:
Fig. 1 is a schematic cross-sectional view of an assembled mould according to the present invention;
Fig. 2 is a cross-sectional view of a master pattern;
Fig. 3 is a cross-sectional view of a master pattern with an attached first layer of mould matrix material;
Fig. 4 is a schematic cross-sectional view of a further production step in producing a mould according to the present invention, wherein the bottom box of the mould is formed;
Fig. 5 is a schematic cross-sectional view of an even further production step in producing a mould according to the present invention, wherein the top box of the mould is formed;
Fig. 6 is a schematic view of the bottom box of a mould according to the present invention.

In a particular embodiment the mould according to the present invention comprises a top box 1 and a bottom box 2. Top box 1 and bottom box 2 are made up from a mould matrix material containing at least one type of carbon fibres and a phenolic resin. Close to the surface on which a product will be formed in the cast there is provided an additional layer of matrix material which will be referred to from now on as "surface layer".

In the specific embodiment described by way of example the main part of the top box 1 and the bottom box 2 constitute a support part that is made from a material containing phenolic resin and carbon fibres of any usual kind. The surface layer, however, is formed by a different mixture, in the particular preferred embodiment by a phenolic resin containing carbon nano fibres.

The assembled mould comprises a bottom plate 3 and side walls 4. These members can, in a way known from the prior art, be made from steel or any other material that can bear the loads applied during the manufacture process.

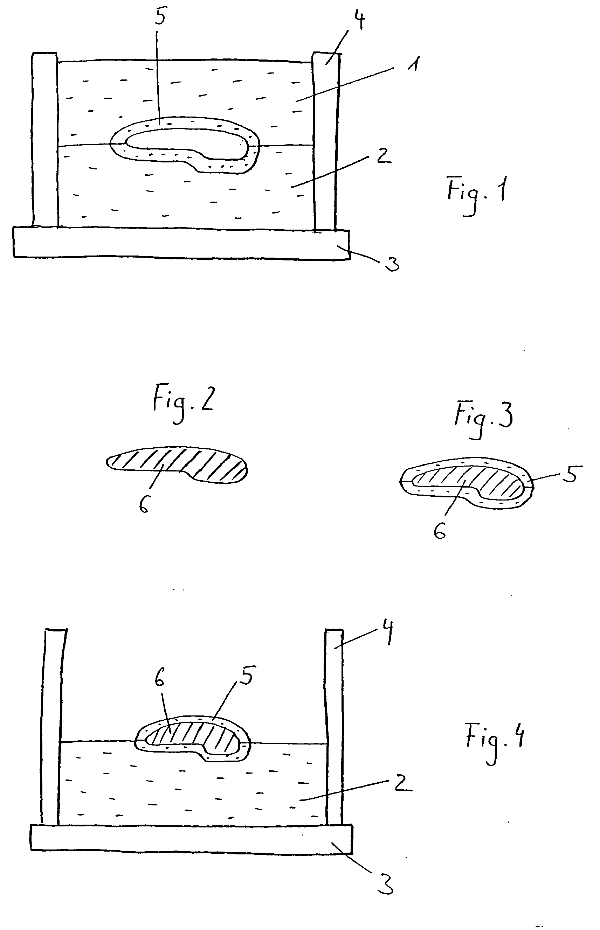

In the following a process of making a mould according to the invention will be described with reference to figures 2 to 5.

In a first step a liquid water-based phenolic resin is mixed with a first type of carbon fibres, in the particular embodiment carbon nano fibres. The most preferred commercial range of carbon nano fibre content is 30 to 60 weight percent of such carbon nano fibres in the whole mass of resin and fibres. A preferred type of phenolic resin therefore is the one being known as Cellobond J2027L from Borden Chemical UK Ltd. As a next step, a catalyst is added to mixture. Therefore, a product named Phencat 382 (Cellobond) is most preferred. The content of catalyst being used is smaller or close to 5% and hence lies well below the usually recommended value of 5 to 10%. The composition obtained is a modelling-clay-like carbon nano fibre "green paste", containing phenolic resin, catalyst and carbon nano fibres. Using the thixotropic form of the resin allows a wider variation of the carbon nano fibre content.

As a next step a master pattern will be coated with this modelling-clay-like carbon nano fibre paste. The coating will later form the surface layer of the mould and ensure good material properties of the mould including strength, heat dissipation, surface finish, resistance to wear and ease of use. Before the modelling clay can be applied, it will be necessary to apply a release agent to the master pattern. While in the prior art polyvinyl alcohol has been used as release agent, now a silicone containing release agent is preferred. The release agent is simply sprayed several microns on the model's surface. Next, the modelling clay will be applied like gravel to the model, therefore allowing air to escape. Inside the paste bubbles remaining from the mixing process can escape via the nano fibres when a pressure is applied during further production steps. The modelling clay will have a thickness of 10 to 30 mm on the master pattern, but could also be much thicker. It would even be possible to make the whole mould from this material and hence substitute any carbon fibre of usual kind completely. This would, however, result in an unreasonably expensive mould.

In a further step, a liquid water-based phenolic resin is mixed with a second type of carbon fibres, e.g. short fibres of a conventional kind of carbon fibres. The most preferred commercial range of carbon fibre content is 55 to 60 weight percent of such carbon fibres in the whole mass of resin and fibres. A preferred type of phenolic resin therefore is again the one being known as Cellobond J2027L from Borden Chemical UK Ltd.

As a next step, a catalyst is added to mixture. Therefore, also the product named Phencat 382 (Cellobond) is most preferred. The content of catalyst being used is smaller or close to 5% and hence lies well below the usually recommended value of 5 to 10%.

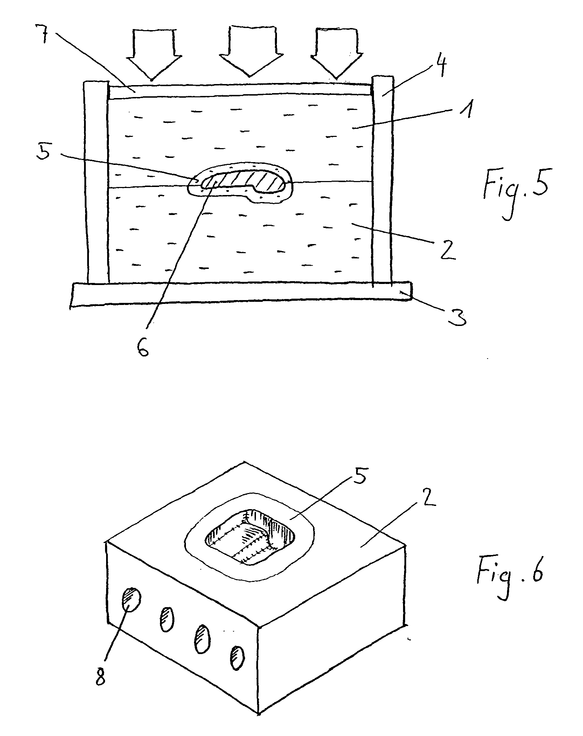

With this second mixture of phenolic resin containing carbon fibres the top box 1 and the bottom box 2 will now be formed. This can be done in ways already known in the prior art, with particular reference to the method disclosed in British Patent Application GB 2 360 244 A. As a difference, much lower moulding pressure as shown in figure 5 and much lower moulding temperatures can be used. It is therefore preferred to perform the step of applying a temperature and a pressure to the matrix material for a predetermined time with the following values:
preferred moulding pressure: 500 to 800 psi (35 to 55 bar)
preferred moulding temperature: 70 to 80°C
curing time: less than one hour.

The pressure can most easily be applied to the top member 7 of the mould.

Shelf life of the premixed paste for the phenolic mould according to the invention is typically up to one hour, but could be even as long as three months. In comparison to this, the shelf life of polyurethane resin used in the prior art is about 7 to 12 minutes. Hence, ease of use is considerably improved.

In this way, the top box 1 and the bottom box 2 are produced in a quick and relatively cheap way. Figure 6 shows a schematic view of a bottom box 2 according to the present invention. Additionally top the features already described this bottom box 2 has channels 8 for a cooling liquid. By guiding water or oil through these channels the mould and hence the product therein can be cooled. The product will hence solidify in a much shorter time which results in a considerably improved efficiency of the moulding process.

Moreover, although several embodiments of the invention have been described with reference to the accompanied drawings, the invention is not limited to these specific embodiments. In particular, not all features need be present in the described combination. Instead, any other combination of features falling within the scope of the appended claims may be applied.

In any case, this new type of mould matrix material has completely superior qualities to materials known from the prior art. It allows for the first time repeatable quality plastic parts to be injection moulded from a resin tool. Sizes, weights, material specifications and surface finish of the product formed in such a mould are far superior to those previously attained and are identical to the qualities of conventially moulded parts, presently using steel and/or aluminium dies.

## Claims

1. A mould for producing an article to be formed therein, the mould matrix material containing at least one type of carbon fibres, **characterized in that** the mould matrix material comprises a cured phenolic resin.

2. A mould as claimed in claim 1, **characterized in that** the mould matrix material has
a flexural strength in the range of 250 to 500 MPa,
a flexural modulus in the range of 10 to 30 GPa.

3. A mould as claimed in claim 1, **characterized in that** the mould matrix material has
a compressive strength in the range of 200 to 300 MPa,
a compressive modulus in the range of 5 to 15 GPa.

4. A mould as claimed in claim 1, **characterized in that** the mould matrix material has
a hardness in the range of 50 to 125 Vickers.

5. A mould as claimed in claim 1, **characterized in that** the mould matrix material has
a tensile modulus in the range of 15 to 40 GPa.

6. A mould as claimed in claim 1, **characterized in that** the mould matrix material has
a tensile strength in the range of 150 to 350 MPa.

7. A mould as claimed in any of the preceding claims, **characterized in that** the mould matrix material has a continuous operating temperature above 350°C and a transient operating temperature of up to 600°C.

8. A mould as claimed in any of the preceding claims, **characterized in that** the mould matrix material has a thermal conductivity in the range of 10 to 100 W/mK, preferably between 25 and 50 W/mK.

9. A mould as claimed in any of the preceding claims, **characterized in that** the mould matrix material has an electric conductivity in the range of 10⁻⁴ Ωm to 10⁻² Ωm.

10. A mould as claimed in any of the preceding claims, **characterized in that** the mould matrix material further comprises at least one type of a filler material.

11. A mould as claimed in claim 8, **characterized in that** the filler material increases the electrical conductivity of the mould matrix material, the filler material preferably comprising a metal, a precious metal and/or pieces thereof, e.g. aluminium, copper, titanium and/or steel fibres.

12. A mould as claimed in claim 8 or 9, **characterized in that** the filler material increases the thermal conductivity of the mould matrix material, the filler material preferably comprising a metal, a ceramic, other materials and/or pieces thereof, e.g. aluminium nitride, boron nitride, silicon nitride, steel fibres and/or graphite flakes.

13. A mould as claimed in any of the preceding claims, **characterized in that** the mould comprises means for cooling the mould, e.g. channels for a cooling liquid such as water or oil.

14. A mould as claimed in any of the preceding claims, **characterized in that** the carbon fibres include carbon nano fibres.

15. A mould as claimed in any of the preceding claims, **characterized in that** the mould matrix material contains at least two types of carbon fibres, one type of which including carbon nano fibres.

16. A mould as claimed in claim 15, **characterized in that** said at least two types of carbon fibres are mixed homogeneously within the mould matrix material.

17. A mould as claimed in claim 15, **characterized in that** said at least two types of carbon fibres are arranged in layers within the mould matrix material.

18. A mould as claimed in claim 17, **characterized in that** the carbon nano fibres are arranged in a surface layer which is adapted to come - in use - into contact with the article to be formed within the mould.

19. A mould as claimed in claim 17 or 18, **characterized in that** the content of carbon nano fibres in the respective layer is in a range between 10 to 70 wt% of the whole mould matrix material in the respective layer, preferably between 30 and 60 wt%, in particular 50 wt%.

20. Method of producing a mould comprising the steps of:
- mixing a liquid phenolic resin with at least one type of carbon fibres and a catalyst enabling the mixture to cure;
- applying said mould matrix material around a pattern;
- applying a temperature and a pressure to the matrix material for a predetermined time causing it to harden;
- removing the pattern from the mould.

21. The method as claimed in claim 20, wherein the temperature to harden the mould matrix material is less than 100°C, preferably in a range between 70° to 80° C.

22. The method as claimed in claim 20 or 21, wherein the pressure to harden the mould matrix material is less than 1000 psi, preferably in a range between 500 to 800 psi.

23. The method as claimed in any of claims 20 to 22, further comprising the step of mixing a filler material to the liquid phenolic resin, preferably a metal, a precious metal, a ceramic, other materials and/or pieces thereof, e.g. aluminium, copper, titanium, aluminium nitride, boron nitride, silicon nitride, steel fibres and/or graphite flakes.

24. The method as claimed in any of claims 20 to 23, wherein the content of catalyst is less than 5wt% of the total weight of phenolic resin and catalyst.

25. The method as claimed in any of claims 20 to 24, wherein the carbon fibres include carbon nano fibres.

26. The method as claimed in any of claims 20 to 25, wherein the mould matrix material includes at least two types of carbon fibres, one type of which including carbon nano fibres.

27. The method as claimed in claim 26, wherein the step of mixing is performed to obtain a homogenous mixture of the at least two types of carbon fibres.

28. The method as claimed in claim 26, wherein the step of mixing is performed separately for the at least two types of carbon fibres, thereby obtaining at least two mixtures of mould matrix material, and wherein the method step of applying said mould matrix material around a pattern comprises the sub-steps of:
- applying a first mixture of mould matrix material, preferably the one containing said carbon nano fibres, around the pattern, thereby forming a first layer of mould matrix material; and
- applying a second mixture of mould matrix material around the obtained first layer enclosing the pattern, thereby forming a second layer of mould matrix material.

29. The method as claimed in any of claims 25 to 28, wherein the content of carbon nano fibres in the respective layer is in a range between 10 to 70 wt% of the whole mould matrix material of the respective layer, preferably between 30 and 60 wt%, in particular 50 wt%.
